# EUROPEAN PATENT APPLICATION

(11) **EP 4 386 941 A1**
(43) Date of publication of application: **19.06.2024**
(21) Application number: 23192112.3
(22) Date of filing: 18.08.2023
(51) Int. Cl.: H01M 10/613, H01M 10/625, H01M 10/6556, H01M 50/249, H01M 50/271, H01M 50/342, H01M 50/367, H01M 50/507, H01M 50/514, H01M 50/55

(54) **BATTERY PACK**

(30) Priority: 15.12.2022 CN 202211615917
(71) Applicant: AESC Japan Ltd., Kanagawa, 2520012 (JP)
(72) Inventor: HE, Yafei, Jiangyin City, Wuxi City (CN)
(74) Representative: Becker, Eberhard

(57) **Abstract**

A battery pack including a tray (10), a cell (20), and an upper cover (30) is provided. A plurality of cells (20) are arranged in an array and accommodated in the tray (10) in a detachable manner, and the upper cover (30) is detachably connected to the tray (10). The battery pack further includes a bus bar assembly (40), which is integrated on the upper cover (30), the bus bar assembly (40) includes a conductive sheet, an elastic member, and a contact member. Two ends of the elastic member (42) are electrically connected to the conductive sheet and the contact member respectively. The contact member is detachably and electrically connected to an electrode terminal (21) of the cell (20).

## Description

### BACKGROUND

### Technical Field

The disclosure belongs to the field of power battery, and in particular relates to a battery pack.

### Description of Related Art

With the rapid development of electric vehicles, the requirements for energy density and safety of battery modules are also set higher. The current trend of manufacturing big battery modules aims to increase the energy density of battery modules and reduce costs. In order to improve the energy density of battery module, typically a battery module contains multiple cells, which are stacked in sequence and fixed and assembled through end plates and side plates as well as end plates and straps to form a module. The module is assembled into a battery pack through a lifting tool, and the module is bonded to the bottom of the battery pack through a structural adhesive, thereby satisfying requirement for high integration and high energy density. However, the strength of the structural parts of module relies on the quality of a conductive structural adhesive at the bottom, and therefore the requirement for strength of adhesive is high. In the meantime, the cells are connected through connecting sheets by welding, and the modules are connected by high-voltage copper bars. It is impossible to disassemble and replace a single module at a time, once a cell fails, the entire battery pack must be scrapped, which results in high maintenance and after-sales costs and waste of resources. In addition, the known battery pack packaging method is also found to have the following defects: connecting sheets and the cell electrode terminals are connected by welding, but the welding strength is not high enough; when the cells are expanded after cycles, the expansion force cannot be released, and consequently the structural parts will fail; there are difficulties in cooling down high-rate charge-discharge cell electrode terminals; there is no effective protection for cell thermal runaway, and it is impossible to achieve the level of cell without thermal diffusion; the internal space utilization rate of battery pack is low; heating and cooling efficiency of module is low, the cooling and heating channel can only be set at the bottom of the cell; the design of vibration and impact structural parts fails to absorb energy, and require high strength for structural parts; there are high requirements set for the welding process and the manufacturing cost is high.

### SUMMARY

In view of the above-mentioned shortcomings of the related art, the purpose of the present disclosure is to provide a battery pack capable of reducing maintenance costs.

To achieve the above purpose and other related purposes, the present disclosure provides a battery pack, which includes: a tray; a cell, and a plurality of cells are arranged in an array and accommodated in the tray in a detachable manner, the cell is provided with a top cover; and an upper cover, which is detachably connected to the tray. The top cover is provided with an electrode terminal facing the upper cover. The battery pack further includes a bus bar assembly. The bus bar assembly is integrated on the upper cover, the bus bar assembly includes a conductive sheet, an elastic member, and a contact member. Two ends of the elastic member are electrically connected to the conductive sheet and the contact member respectively. The contact member is detachably and electrically connected to the electrode terminal of the cell.

In an optional embodiment of the present disclosure, a cell position-limiting portion is provided on the lower surface of the upper cover, and the cell position-limiting portion is engaged with the top cover of the cell.

In an optional embodiment of the present disclosure, the tray is provided with cell position-limiting grooves, and each of the cells is accommodated in a corresponding cell position-limiting groove.

In an optional embodiment of the present disclosure, the tray further includes an intermediate beam arranged between the array of the cells, and the height of the intermediate beam is lower than the height of the cells. A raised structure facing the intermediate beam is formed at a position of the upper cover corresponding to the intermediate beam, and the raised structure is detachably connected with the intermediate beam.

In an optional embodiment of the present disclosure, a probe is provided on the contact member, and the probe pierces into the electrode terminal of the cell.

In an optional embodiment of the present disclosure, a recess is provided on the lower surface of the upper cover in a direction away from the cell, and an exhaust channel is formed between the recess and the top of the cell. The exhaust channel at least covers the part above an explosion-proof valve of some of the cells.

In an optional embodiment of the present disclosure, a cooling channel is provided inside the upper cover, and the cooling channel at least partially passes through the part above the conductive sheet and/or the electrode terminal and/or the exhaust channel. The liquid inlet and liquid outlet of the cooling channel are both located on the upper surface of the upper cover.

In an optional embodiment of the present disclosure, a fragile portion is provided between the exhaust channel and the cooling channel. The fragile portion is located above the explosion-proof valve of the cell, and the fragile portion is configured to be broken when being impacted as the explosion-proof valve of the cell is exploded, so that the cooling channel communicates with the exhaust channel.

In an optional embodiment of the present disclosure, at least one of the upper cover and the tray is provided with a pre-positioning device, and the pre-positioning device is configured to keep the upper cover at a specified position relative to the tray.

In an optional embodiment of the present disclosure, a buffer pad made of an elastic heat-conducting material is provided between the lower surface of the upper cover and the cell, and a buffer medium made of an elastic heat-conducting material is provided between the bottom surface of the cell and the tray.

The technical effect of the present disclosure is that there is no adhesive connection between the cell and the tray of the present disclosure. The horizontal fixation is realized through the squeezing between the cells, and the vertical fixation of the cells is realized through the squeezing of the upper cover simultaneously. The welding-free design is adopted between the cells and the bus bar assembly, and the contact between the bus bar assembly and the electrode terminals of the cells is realized through the downward pressure of the upper cover. When any of the cells fails, by simply separating the upper cover from the tray, it is possible to remove any cell from the tray, so that the maintenance cost of the battery pack may be effectively reduced. When the upper cover of the present disclosure is connected to the tray, the contact member may be abutted against the electrode terminals of the cells under the elastic force of the elastic member, and the elastic member is able to be deformed to some extent. The elastic force of the elastic member may ensure that the contact member is always in a reliable contact state with the electrode terminals.

### BRIEF DESCRIPTION OF THE DRAWINGS

FIG. 1 is a schematic view of a packaging structure of a general battery pack in the related art.
FIG. 2 is a perspective view of a battery pack provided in an embodiment of the present disclosure.
FIG. 3 is an exploded view of a battery pack provided in an embodiment of the present disclosure.
FIG. 4 is a partial exploded view of a battery pack provided in an embodiment of the present disclosure.
FIG. 5 is a top view of a battery pack provided in an embodiment of the present disclosure.
FIG. 6 is sectional view taken along line A-A of FIG. 5.
FIG. 7 is a partial enlarged view of I portion in FIG. 6.
FIG. 8 is a perspective view of an upper cover provided in an embodiment of the present disclosure.
FIG. 9 is a partial enlarged view of II portion in FIG. 8.
FIG. 10 is a top view of an upper cover provided in an embodiment of the present disclosure.
FIG. 11 is a sectional view taken along line B-B in FIG. 10.
FIG. 12 is a partial enlarged view of III portion in FIG. 11.
FIG. 13 is a principle diagram of an elastic assembly provided in an alternative embodiment of the present disclosure.
FIG. 14 is a principle diagram of an elastic assembly provided in another alternative embodiment of the present disclosure.
FIG. 15 is a principle diagram of an elastic assembly provided in yet another alternative embodiment of the present disclosure.
FIG. 16 is a partial enlarged view of IV portion in FIG. 11.
FIG. 17 is a perspective view of a bus bar assembly provided in an embodiment of the present disclosure.
FIG. 18 is a partial enlarged view of G portion in FIG. 17.
FIG. 19 is a schematic view of an assembly structure of an elastic member and a contact member provided in an embodiment of the present disclosure.
FIG. 20 is a perspective view of a tray provided in an embodiment of the present disclosure.
FIG. 21 is a partial enlarged view of I portion in FIG. 20.

### DESCRIPTION OF THE EMBODIMENTS

Embodiments of the present disclosure are described below through specific examples, and those skilled in the art can easily understand other advantages and effects of the present disclosure from the contents disclosed in this specification. The present disclosure can also be implemented or applied through different specific implementation modes, and various modifications or changes can be made to the details in this specification based on different viewpoints and applications without departing from the spirit of the present disclosure. It should be noted that the following embodiments and features in the embodiments can be combined with each other as long as they do not conflict each other.

It should be noted that the diagrams provided in the following embodiments are only schematically illustrating the basic concepts of the present disclosure, and thus only the components related to the present disclosure are shown in the diagrams, rather than the number, shape, and dimension of the components in actual implementation. The type, quantity and proportion of various components can be changed freely during actual implementation, and the component layout may also be more complicated in practice.

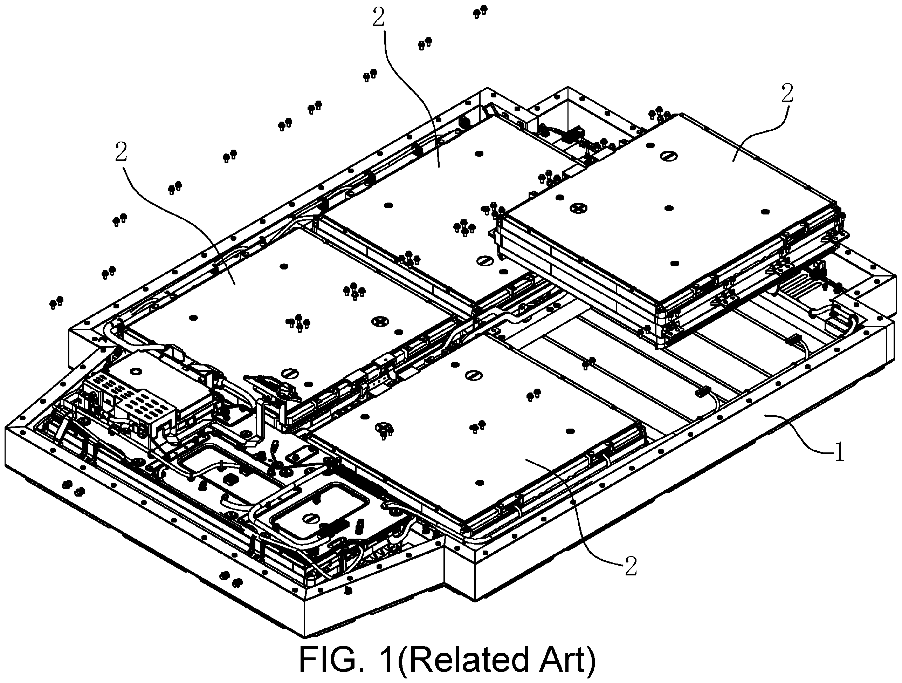

The battery pack provided in the present disclosure may be applied to the power battery of electric vehicles, for example. This type of battery pack is imposed with higher requirements in terms of energy density and safety performance. For example, FIG. 1 shows an existing power battery packaging method. First a cell is packaged in a module 2, and then multiple modules 2 are packaged into a PACK (battery pack) 1. This packaging method is referred to as CTM (Cell to Module). The shortcoming of CTM packaging is that the space utilization rate is low, because the housing of module 2 and accessories thereof take up a lot of space. Meanwhile, the modules 2 need to be connected by wiring, and which also takes up a certain amount of space. To overcome the defect, a new packaging method is provided, which integrates the cells directly into the PACK and eliminates the module unit in the middle. This packaging method is referred to as CTP (Cell to Pack). CTP packaging may effectively improve space utilization, thereby increasing the energy density of power batteries. The battery pack provided by the present disclosure belongs to a type of CTP packaging technology. The present disclosure improves the assembly structure and assembly method of cells on basis of the existing CTP packaging technology, so that each cell may be disassembled separately, while ensuring the structural strength of the battery pack and effectively reducing the maintenance cost of the power battery.

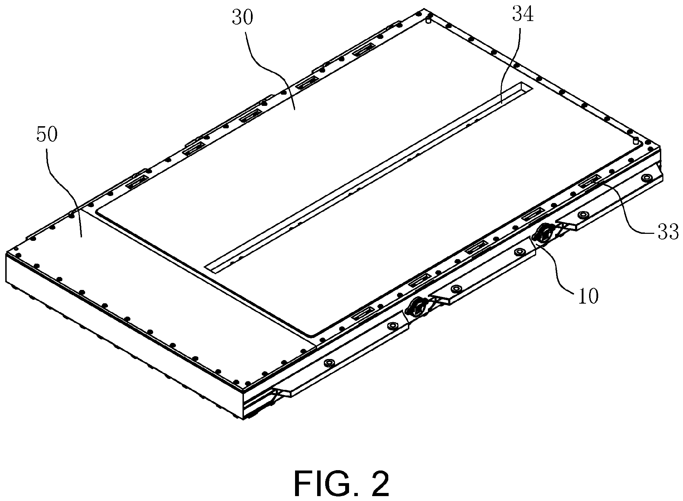

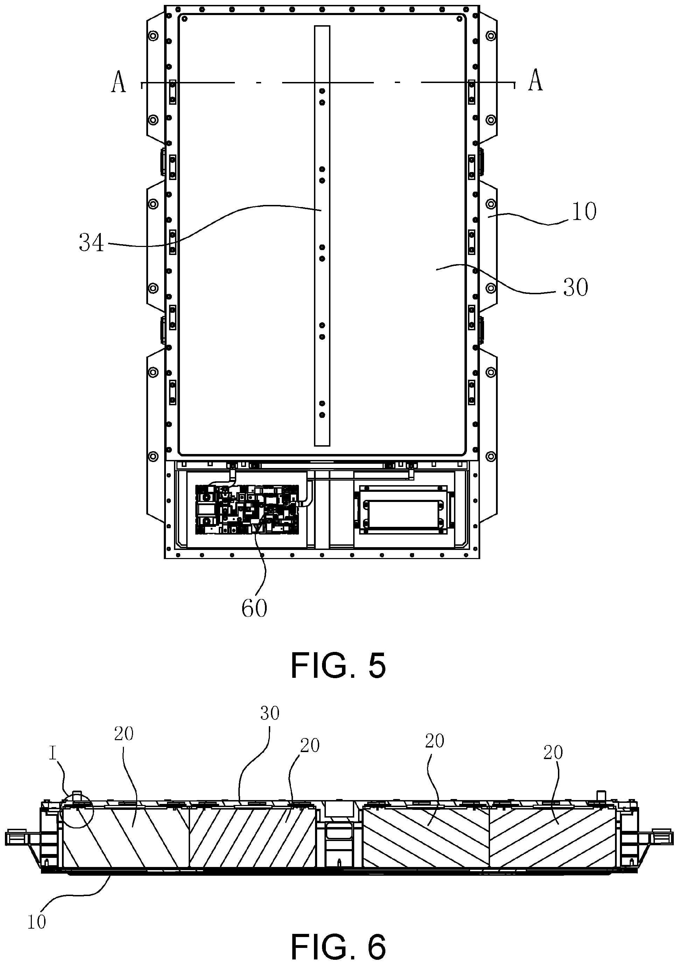

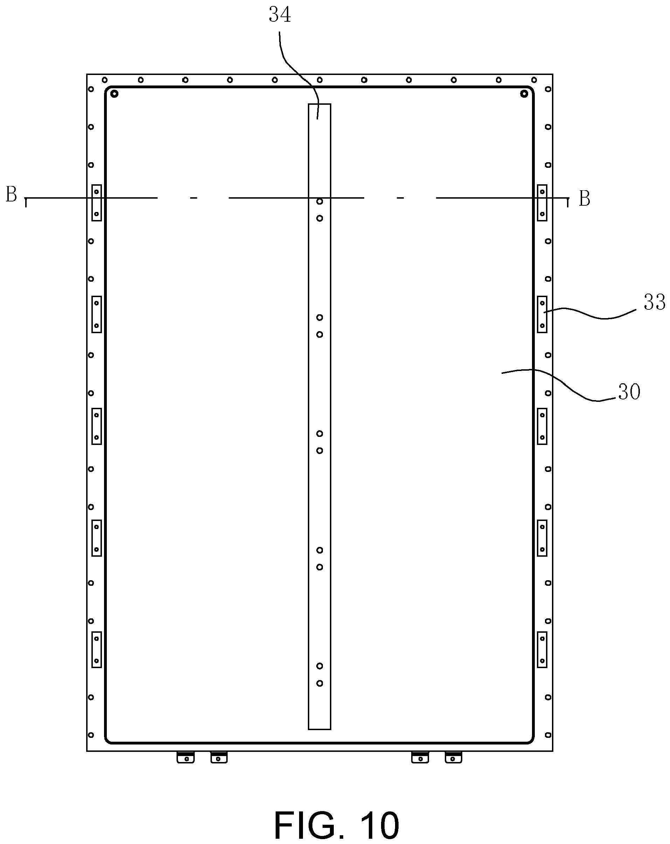

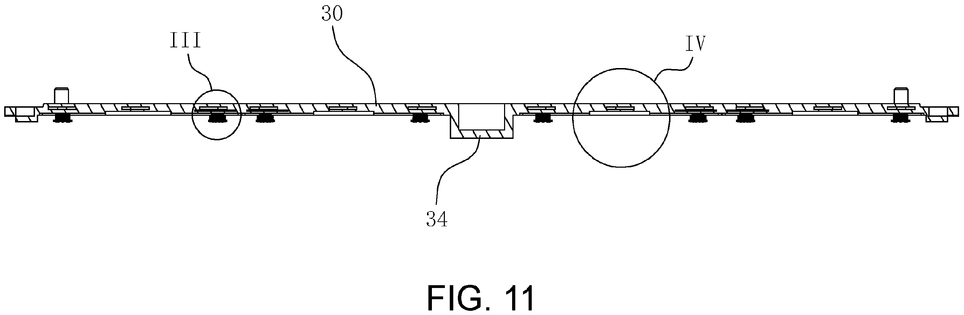

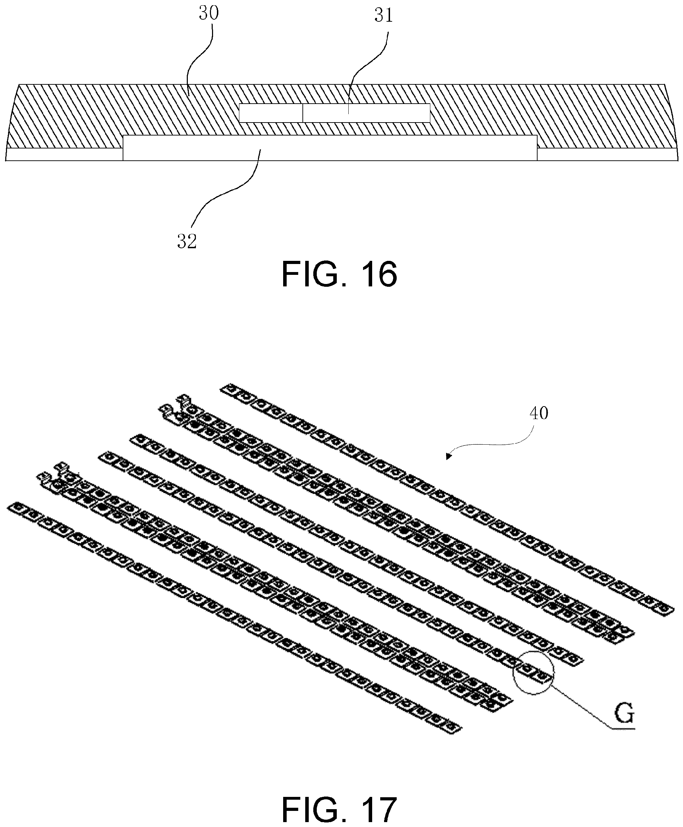

Please refer to FIG. 2 to FIG. 16, a battery pack includes a tray 10, a cell 20, an upper cover 30 and a bus bar assembly 40. It can be understood that the components listed in the present disclosure do not involve all components of the power battery, but only the improved part made by the present disclosure. In fact, the battery pack should also include the inherently required electrical system 60, as well as the connection structure for connecting the vehicle body, etc., the details will not be repeated here.

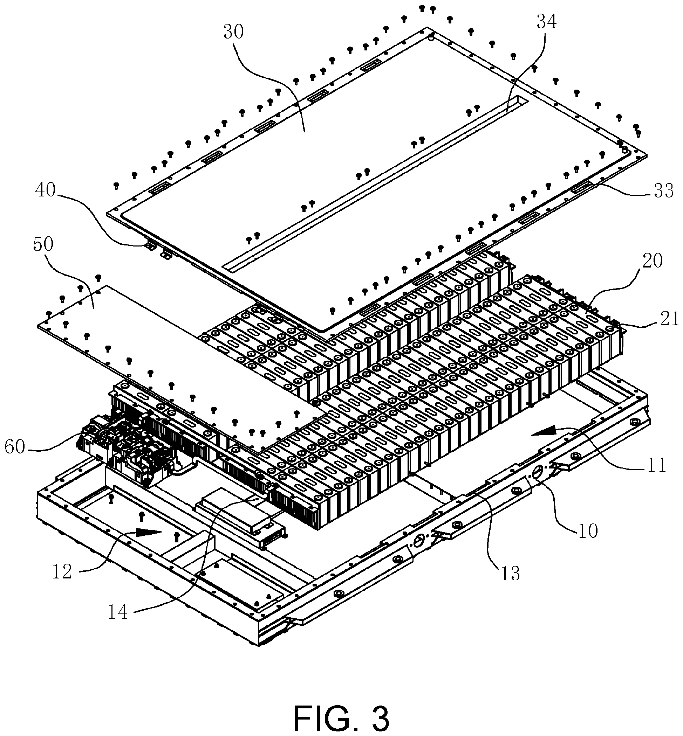

Please refer to FIG. 3, the tray 10 is provided with an accommodating space 11. In a specific embodiment, the tray 10 may include, for example, a side beam and a bottom plate, and the side beam and the bottom plate may be an integral structure or a separate structure. For example, the side beam may be made of aluminium alloy profiles, and the bottom plate may be configured on the bottom surface of the side beam, for example, by riveting, welding, or bolting. In some other embodiments, the tray 10 may also be formed by one-piece die-casting, for example.

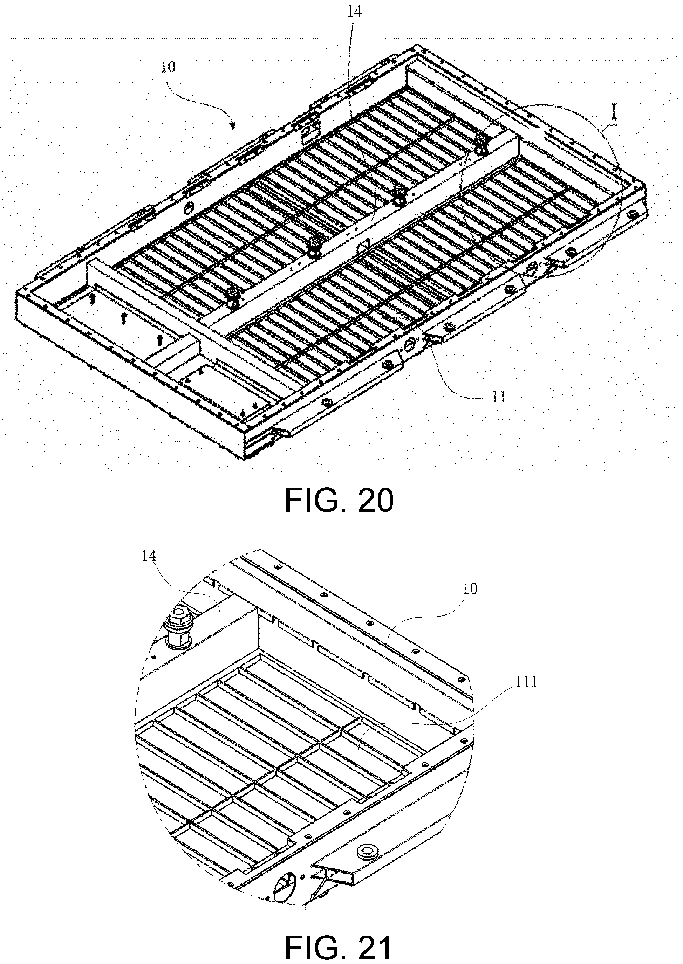

Please refer to FIG. 20 and FIG. 21. In a specific embodiment, the accommodating space 11 may be a thoroughly continuous area, or may be divided into multiple separate areas. For example, horizontal beams or longitudinal beams may be arranged in the accommodating space 11 to divide the accommodating space 11 into two areas or more, so as to improve the overall structural strength of the battery pack. In a further embodiment, the bottom wall of the accommodating space 11 is provided with a plurality of cell position-limiting grooves 111 distributed corresponding to various cells 20, and the bottom of various cells 20 is respectively accommodated in various cell position-limiting grooves 111, so as to limit the position of the bottom of the cell 20.

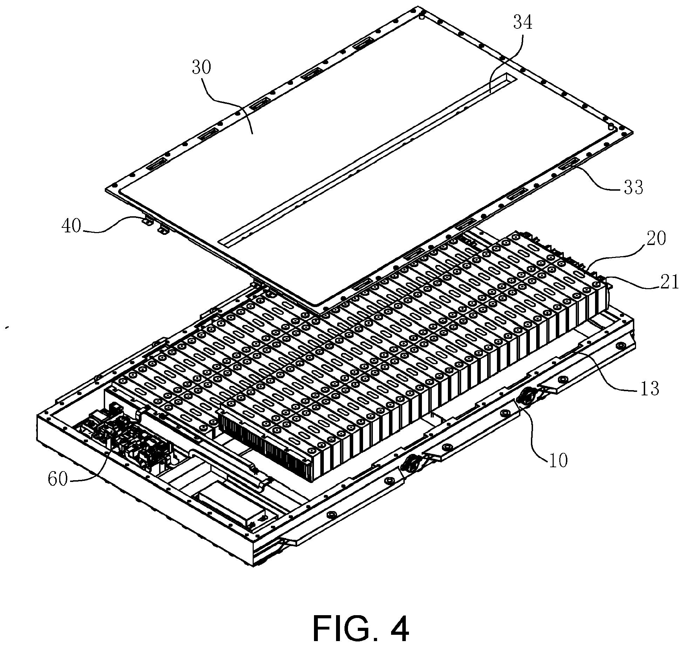

Please refer to FIG. 3 and FIG. 4, a plurality of cells 20 are arranged in an array, and each cell 20 is detachably accommodated in the accommodating space 11. The cell 20 is provided with a top cover, and the top cover is provided with an electrode terminal facing the upper cover 30. In a specific embodiment, each cell 20 is arranged in a rectangular array, and the large surface of each cell 20 may face the front and rear directions of the battery pack, or may also face the left and right directions of the battery pack. It should be noted that in the description of the present disclosure, the expressions indicating directions such as "front and back", "left and right" are interpreted based on the general understanding of those skilled in the art, that is, front, back, left and right refer to the front, rear, left, and right directions of a vehicle after the battery pack is loaded on the vehicle. It can be understood that, in a specific embodiment, the side surfaces of various cells 20 do not necessarily fit each other completely. For example, a spacer made of an elastic heat-conducting material may be arranged between various cells 20. On the one hand, the spacer may transfer the heat from the side surface of the cell 20 to the tray 10 or the upper cover 30, and on the other hand, the spacer may allow for a working margin for the expansion of the cell 20.

Refer to FIG. 2, FIG. 3 and FIG. 4, the upper cover 30 is detachably mounted on the upper end of the tray 10; the upper cover 30 is made of insulating material. In a specific embodiment, the edge of the upper cover 30 may be connected to a side beam of the tray 10 by bolts, for example. It can be understood that there is not only one connection mode between the upper cover 30 and the tray 10. For example, in other embodiments, it is also possible to realize fast connection between the upper cover 30 and the tray 10 by using buckles and other structures, as long as it can be ensured that the upper cover 30 is able to generate sufficient pressing force on the cell 20 and the electrode terminal 21 of the cell 20 after being set in place.

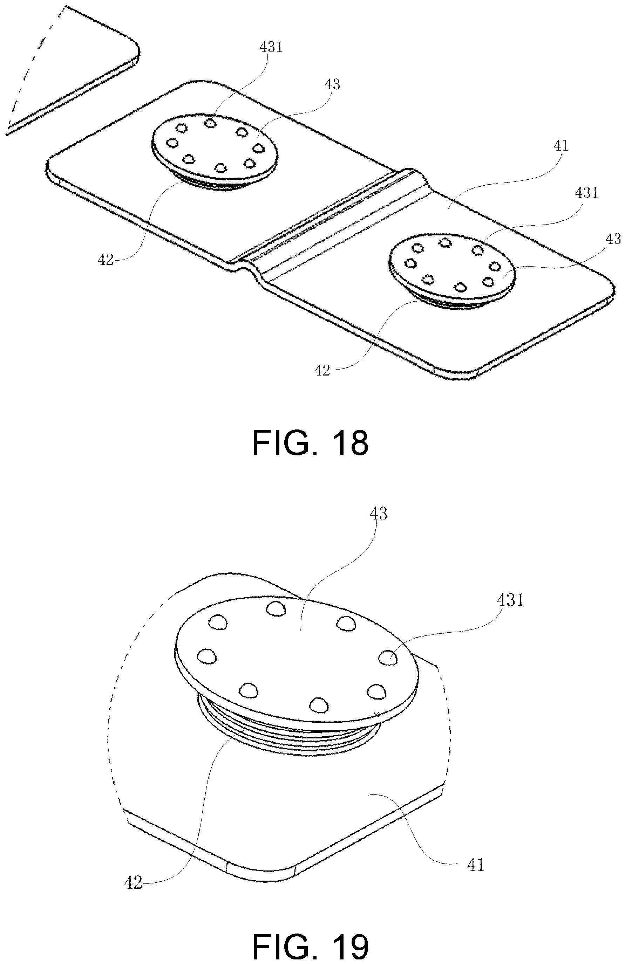

Please refer to FIG. 3, FIG. 4, FIG. 17, FIG. 18, and FIG. 19. In a specific embodiment, the bus bar assembly 40 includes an integrated busbar for high-voltage output, and the bus bar assembly 40 is integrated on the upper cover 30. Specifically, the bus bar assembly 40 includes a conductive sheet 41, an elastic member 42 and a contact member 43. The conductive sheet 41 is partially pre-embedded inside the upper cover 30, two ends of the elastic member 42 are respectively electrically connected to the conductive sheet 41 and the contact member 43, and the contact member 43 is detachably and electrically connected to the electrode terminal of the cell 20. When the upper cover 30 is connected to the tray 10, the bus bar assembly 40 may be conducted with the electrode terminal 21 of the cell 20. In a specific embodiment, for example, the conductive sheet 41 may be integrated in the upper cover 30, and the method of integrating the conductive sheet 41 in the upper cover 30 includes but is not limited to directly pre-embedding the conductive sheet 41 inside the upper cover 30, or fixing the conductive sheet 41 on the lower surface of the upper cover 30. For example, the conductive sheet 41 may be pre-embedded in the upper cover 30 as an insert during the injection molding process of the upper cover 30, or a groove for accommodating the conductive sheet 41 may be reserved on the lower surface of the upper cover 30. After the conductive sheet 41 is arranged in the groove, the conductive sheet 41 is covered with a cover plate, and only the area to be connected to the cell 20 is exposed. Alternatively, the conductive sheet 41 may be arranged on the lower surface of the upper cover 30 by buckling, screwing, gluing and the like. In some other embodiments, for example, the low-voltage sampling busbar of the battery pack may also be integrated into the upper cover to further simplify the cable structure.

There is no adhesive connection between the cells 20 and the tray 10 of the present disclosure, and the horizontal fixation is realized through the squeezing between the cells 20, and the vertical fixation of the cells 20 is realized through the squeezing of the upper cover 30 simultaneously. In the meantime, a welding-free design is adopted between each cell 20 and the bus bar assembly 40, and the contact between the bus bar assembly 40 and the electrode terminals 21 of the cells 20 is realized through the downward pressure of the upper cover 30. When any of the cells 20 fails, by simply separating the upper cover 30 from the tray 10, it is possible to remove any cell 20 from the tray 10, so that the maintenance cost of the battery pack may be effectively reduced. When the upper cover 30 of the present disclosure is connected to the tray 10, the contact member 43 may be abutted against the electrode terminals 21 of the cells 20 under the elastic force of the elastic member 42, and the elastic member 42 is able to be deformed to some extent. The elastic force of the elastic member 42 may ensure that the contact member 43 is always in a reliable contact state with the electrode terminals 21.

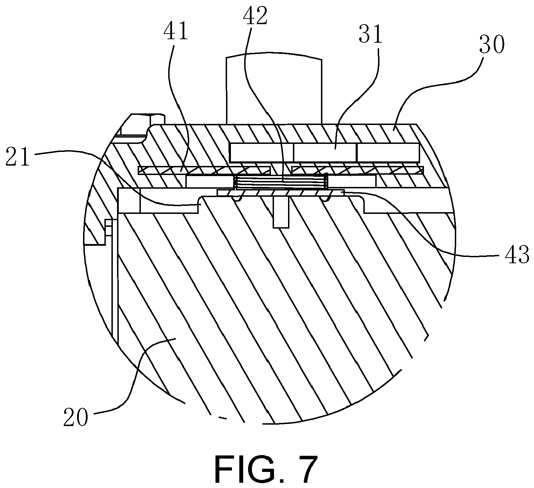

Please refer to FIG. 7, FIG. 9, and FIG. 12. In a specific embodiment, the elastic member 42 may be a compression spring, and a reliable electrical connection between the elastic member 42 and the conductive sheet 41 is required, for example, the linear connection between the elastic member 42 and the conductive sheet 41 may be realized by means of welding, screw connection or riveting. Alternatively, the elastic member 42 may be disposed on the lower surface of the upper cover 30 first, and then the elastic member 42 and the conductive sheet 41 may be electrically connected through a cable.

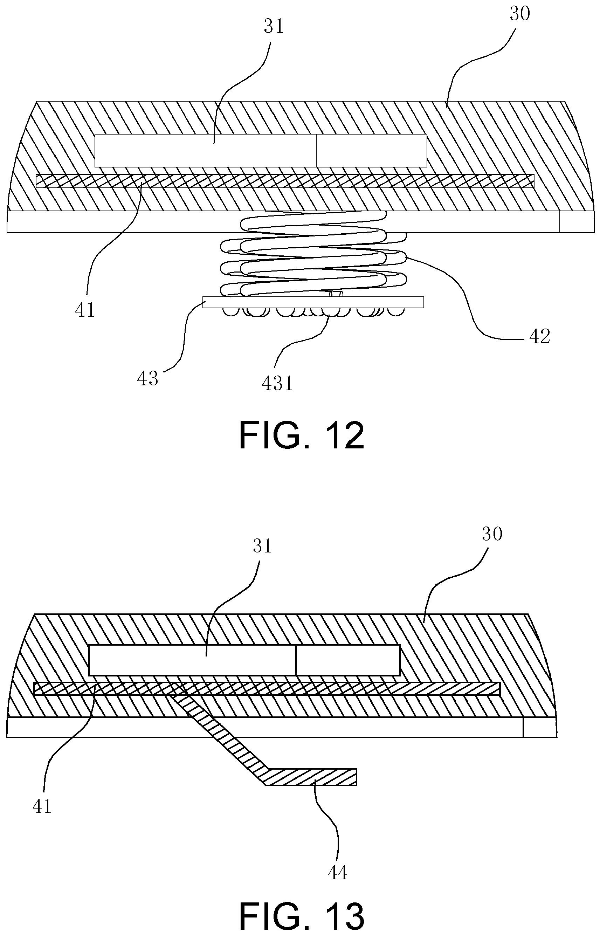

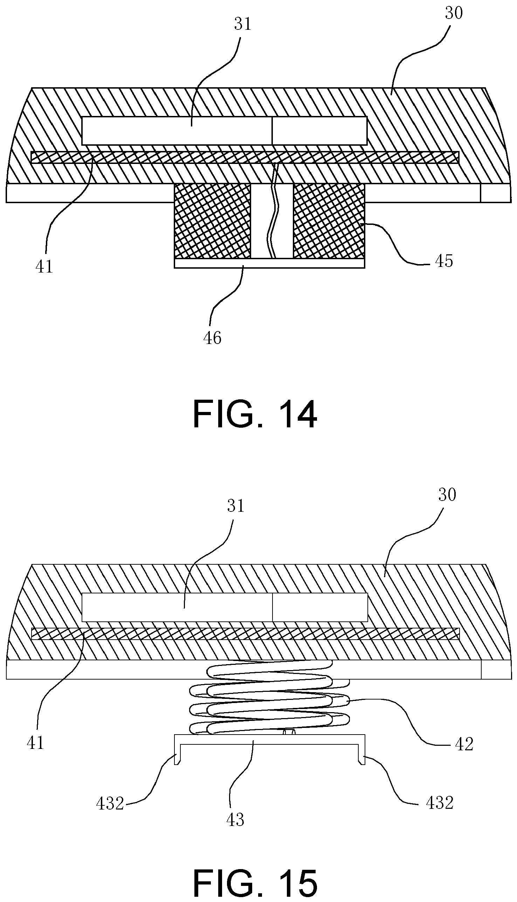

It can be understood that there is not only one specific structural form of the elastic member 42 as long as it can be ensured that the elastic member 42 can be in contact with the electrode terminal 21 and there is a certain elastic preload between the two. As shown in FIG. 13, the elastic member 42 may also be an elastic contact piece 44 protruding from the conductive sheet 41, and the elastic contact piece 44 is bent to some extent to allow a certain extent of deformation. In another example, as shown in FIG. 14, the elastic member 42 may include a block 45 made of elastic materials, and a layer of conductive layer 46 is pasted on the lower surface of the block 45, and the conductive layer 46 is connected to the conductive sheet 41 through wires.

Please refer to FIG. 7, FIG. 9 and FIG. 12. In a further preferred embodiment, a probe 431 is provided on the bottom surface of the contact member 43, and the elastic force of the elastic member 42 is able to drive the probe 431 to pierceinto the electrode terminal 21 of the cell 20. Even if the cell 20 shakes slightly, the contact member 43 and the electrode terminal 21 may always be kept in a fixed state. It should be noted that the length of the probe 431 should not be too long, so that the contact piece 44 may be attached to the top surface of the electrode terminal 21 after the probe 431 is inserted into the electrode terminal 21. The length of the probe 431 may be, for example, 0.5 mm to 1mm. It can be understood that the purpose of setting the probe 431 is to improve the connection reliability between the contact member 43 and the electrode terminal 21, and avoid relative displacement between the contact member 43 and the electrode terminal 21. In some embodiments, the probe 431 may also be replaced by other structures. For example, a downwardly protruding blocking wall 432 is provided on the edge of the contact member 43. When the contact member 43 is attached to the top surface of the electrode terminal 21, the blocking wall 432 may clamp the side wall of the electrode terminal 21. In this way, it is possible to prevent relative displacement between the electrode terminal 21 and the contact member 43. Further, the blocking wall 432 may be elastic so as to generate a certain clamping force on the electrode terminal 21.

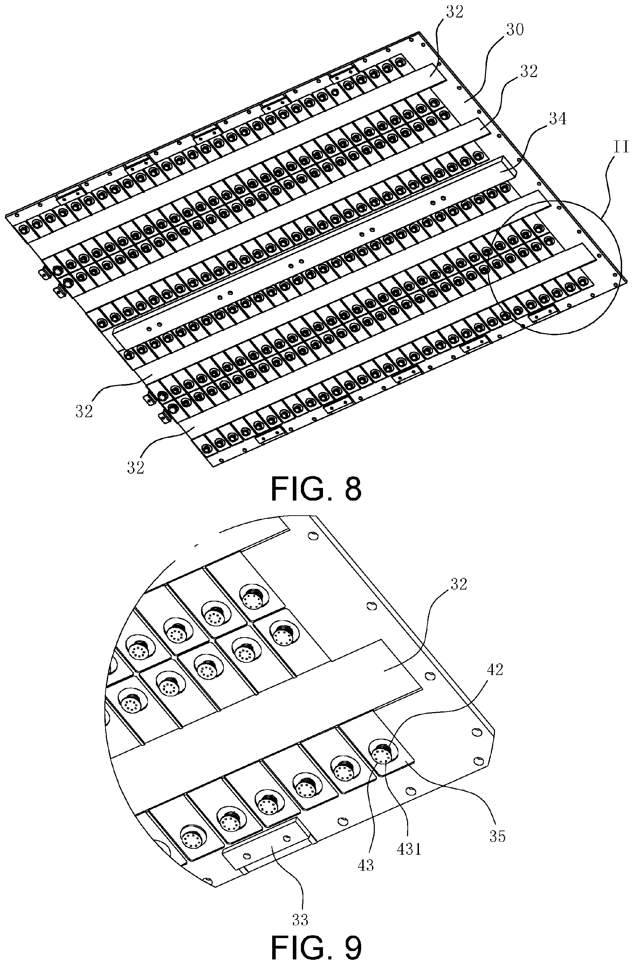

Please refer to FIG. 8, FIG. 9, and FIG. 16. In an alternative embodiment of the present disclosure, a recess is arranged on the lower surface of the upper cover 30 in a direction away from the cell, and an exhaust channel 32 is formed between the recess and the top of the cell 20. The exhaust channel 32 at least covers the part above an explosion-proof valve of some of the cells 20. When the explosion-proof valve of the cell 20 is exploded, the high-pressure gas may be discharged to the outside of the battery pack through the exhaust channel 32, so as to avoid the risk of deflagration caused by the accumulation of high-pressure gas in the battery pack.

Referring to FIG. 7, FIG. 12, and FIG. 16, in a further embodiment, a cooling channel 31 is provided inside the upper cover 30. It can be understood that, in the present disclosure, the cooling channel 31 is integrated in the upper cover 30, so that it is possible to control the temperature of the bus bar assembly 40 and the electrode terminal 21 of the cell 20, and further improve the working efficiency of the power battery. Specifically, the cooling channel 31 may be, for example, a coil pipe pre-embedded in the upper cover 30, or may be a hole directly opened inside the upper cover 30.

Referring to FIG. 7, FIG. 12, and FIG. 16, in a preferred embodiment, the cooling channel 31 at least passes through the part above the bus bar assembly 40, the electrode terminal 21 and the exhaust channel 32. Specifically, the cooling channel 31 may be arranged along the wiring path of the bus bar assembly 40, for example, the electrode terminal 21 of the cell 20 is generally located below the wiring path of the bus bar assembly 40, and the cooling channel 31 may simultaneously modulate the temperatures of the electrode terminal 21 and the bus bar assembly 40.

In a specific embodiment, the liquid inlet and liquid outlet of the cooling channel 31 may be located on the upper surface of the upper cover 30, for example. After the battery pack is connected with the vehicle body, the liquid inlet and the liquid outlet may be directly communicated with the vehicle temperature control pipeline. It can be understood that, for example, a temperature sensor may be provided in the battery pack of the present disclosure, and the vehicle temperature control system may control the working state of the cooling channel 31 according to the real-time temperature of various areas of the battery pack. When the ambient temperature is too low, the cell 20 may be heated, and when the ambient temperature is too high, the vehicle's air conditioning system may be used to cool the cell 20 to ensure that the battery works at an ideal ambient temperature.

In a further embodiment, a fragile portion is provided between the exhaust channel 32 and the cooling flow channel 31, and the fragile portion is located above the explosion-proof valve of the cell 20. The fragile portion is configured to be broken when being impacted as the explosion-proof valve of the cell 20 is exploded, so that the cooling channel 31 communicates with the exhaust channel 32. In this way, the cooling liquid is able to flow into the space where the cell 20 is located to extinguish the fire and cool down the cell 20 to prevent the heat from spreading. In a specific embodiment, the fragile portion may be, for example, a mark provided on the bottom surface of the upper cover 30, or a blind hole used to reduce the thickness of the material between the cooling channel 31 and the exhaust channel 32, or a removable sealing cap set between the cooling channel 31 and the exhaust channel 32.

Referring to FIG. 2, FIG. 3, FIG. 4, FIG. 9, and FIG. 10, a pre-positioning device is provided between the upper cover 30 and the tray 10, and the pre-positioning device is assembled to keep the upper cover 30 at a specified position relative to the tray 10. It can be understood that the pre-positioning device is able to temporarily limit the position of the upper cover 30 before the upper cover 30 and the tray 10 are connected. On the one hand, it is possible to realize rapid positioning for the upper cover 30 and the tray 10, so that it is convenient to perform bolt configuration subsequently. On the other hand, it is also possible to avoid deformation or displacement of the upper cover 30 due to assembly stress during the bolt configuration process. In a specific embodiment, the pre-positioning device may be, for example, a protrusion 33 and a positioning groove 13, one of which is arranged on the upper cover 30, and the other is arranged on the side beam of the tray 10. As shown in the embodiment of FIG. 2 and FIG. 3, the protrusion 33 is located on the upper cover 30, and the positioning groove 13 is located on the tray 10. In this embodiment, the protrusion 33 may be, for example, integrally and injection molded with the upper cover 30, and the protrusion 33 may be, for example, a housing-like structure to save material and reduce the weight of the battery pack.

Please refer to FIG. 9, in a specific embodiment, a cell position-limiting portion 35 is provided on the lower surface of the upper cover 30, and the cell position-limiting portion 35 is engaged with the top cover of the cell 20. The cell position-limiting portion 35 may be, for example, an annular protrusion protruding from the lower surface of the upper cover 30, and a buffer pad made of an elastic heat-conducting material is provided between the lower surface of the upper cover 30 and the cell 20. It can be understood that the engagement between the cell position-limiting portion 35 and the top cover of the cell 20 helps to inhibit the displacement of the upper part of the cell 20 and further improve the stability of the cell 20. When the upper cover 30 is connected to the tray 10, the buffer pad is deformed by being pressed by the top surface of the cell 20, so that the cell 20 may be limited in position to some extent. A buffer medium made of an elastic heat-conducting material is provided between the bottom surface of the cell 20 and the tray 10. The buffer medium may be, for example, a thermally conductive adhesive, but it should be noted that the thermally conductive adhesive only serves to dissipate heat and provide elastic support, rather than to make the cell 20 and the tray 10 stick together.

Please refer to FIG. 3, in an optional embodiment of the present disclosure, the tray 10 further includes an intermediate beam 14 arranged between the array of the cells 20, and the height of the intermediate beam 14 is lower than the height of the cells 20. A raised structure 34 facing the intermediate beam 14 is formed at a position of the upper cover 30 corresponding to the intermediate beam 14, and the raised structure 34 is detachably connected with the intermediate beam 14. The intermediate beam 14 helps to reduce the span of the fixed point of the upper cover 30, so that the bus bar assembly 40 and the electrode terminal 21 of the cell 20 are closely attached to ensure a reliable connection of the connection system. The raised structure 34 and the intermediate beam 14 may be connected by, for example, riveting, bolting and the like.

Please refer to FIG. 2, the tray 10 is further provided with an electrical system accommodating groove 12, and the electrical system 60 is disposed in the accommodating groove. The upper end of the electrical system accommodating groove 12 is provided with an electrical system cover plate 50 which may be disassembled separately. The electrical system cover plate 50 and the cover plate of the accommodating space 11 are separately designed to ensure that the maintenance and replacement of various modules do not affect each other.

To sum up, there is no adhesive connection between the cells 20 and the tray 10 of the present disclosure. The horizontal fixation is realized through the squeezing between the cells 20, and the vertical fixation of the cells 20 is realized through the squeezing of the upper cover 30 simultaneously. In the meantime, the welding-free design is adopted between the cells 20 and the bus bar assembly, and the contact between the bus bar assembly and the electrode terminals 21 of the cells 20 is realized through the downward pressure of the upper cover 30. When any of the cells 20 fails, by simply separating the upper cover 30 from the tray 10, it is possible to remove any cell 20 from the tray 10, so that the maintenance cost of the battery pack may be effectively reduced.

When the upper cover 30 of the present disclosure is connected to the tray 10, the contact member 43 may be abutted against the electrode terminals 21 of the cells 20 through the elastic member 42, and the elastic member 42 is able to be deformed to some extent. The elastic force of the elastic member 42 may ensure that the contact member 43 is always in a reliable contact state with the electrode terminal 21.

The probe 431 of the present disclosure may improve the connection reliability between the contact member 43 and the electrode terminal 21, and avoid relative displacement between the contact member 43 and the electrode terminal 21.

When the explosion-proof valve of the cell 20 of the disclosure is exploded, the high-pressure gas may be discharged to the outside of the battery pack through the exhaust channel 32, so as to avoid the risk of deflagration caused by the accumulation of high-pressure gas in the battery pack.

The cooling channel 31 of the present disclosure is integrated in the upper cover 30, thereby modulating the temperatures of the electrode terminal 21 and the bus bar assembly 40.

The liquid inlet and liquid outlet of the cooling channel 31 of the present disclosure may be respectively located on the upper surface of the upper cover 30, for example. After the battery pack is connected with the vehicle body, the liquid inlet and the liquid outlet may be directly communicated with the vehicle temperature control pipeline.

The fragile portion of the present disclosure is configured to be broken when being impacted as the explosion-proof valve of the cell 20 is exploded, so that the cooling channel 31 communicates with the exhaust channel 32. In this way, the cooling liquid is able to flow into the space where the cell 20 is located to extinguish the fire and cool down the cell 20 to prevent the heat from spreading.

The pre-positioning device of the present disclosure is able to temporarily limit the position of the upper cover 30 before the upper cover 30 and the tray 10 are connected. On the one hand, it is possible to realize rapid positioning for the upper cover 30 and the tray 10, so that it is convenient to perform bolt configuration subsequently. On the other hand, it is also possible to avoid deformation or displacement of the upper cover 30 due to assembly stress during the bolt configuration process.

Some area at the top of the cell 20 of the present disclosure is accommodated in the position-limiting portion 37, which helps to inhibit the displacement of the upper part of the cell 20 and further improve the stability of the cell 20. When the upper cover 30 is connected to the tray 10, the buffer pad is deformed by being pressed by the top surface of the cell 20, so that the cell 20 may be limited in position to some extent.

The intermediate beam 14 of the present disclosure is connected to a groove, which helps to reduce the span of the fixed point of the upper cover 30, so that the bus bar assembly 40 and the electrode terminal 21 of the cell 20 are closely attached to ensure a reliable connection of the high-pressure connection system.

The electrical system cover plate 50 of the present disclosure and the cover plate of the accommodating space 11 are separately designed to ensure that the maintenance and replacement of various modules do not affect each other.

## Claims

1. A battery pack, **characterized by** comprising:
a tray (10);
an upper cover (30), detachably connected to the tray (10); and
a plurality of the cells (20), wherein the plurality of the cells (20) are arranged in an array and accommodated in the tray (10) in a detachable manner, each of the cells (20) is provided with a top cover, and the top cover is provided with an electrode terminal (21) facing the upper cover (30),
wherein the battery pack further comprises a bus bar assembly (40), the bus bar assembly (40) is integrated on the upper cover (30), the bus bar assembly (40) comprises (40) a conductive sheet (41), an elastic member (42), and a contact member (43), two ends of the elastic member (42) are electrically connected to the conductive sheet (41) and the contact member (43) respectively, the contact member (43) is detachably and electrically connected to the electrode terminal (21) of the cell (20).

2. The battery pack according to claim 1, **characterized in that** a cell position-limiting portion (35) is provided on a lower surface of the upper cover (30), and the cell position-limiting portion (35) is engaged with the top cover of the cell (20).

3. The battery pack according to claim 2, **characterized in that** the tray (10) is provided with cell position-limiting grooves (111), and each of the cells (20) is accommodated in the corresponding cell position-limiting groove (111).

4. The battery pack according to claim 3, **characterized in that** the tray (10) further comprises an intermediate beam (14) arranged between the array of the cells (20), and a height of the intermediate beam (14) is lower than a height of the cells (20), a raised structure (34) facing the intermediate beam (14) is formed at a position of the upper cover (30) corresponding to the intermediate beam (14), and the raised structure (34) is detachably connected with the intermediate beam (14).

5. The battery pack according to claim 1, **characterized in that** a probe (431) is provided on the contact member (43), and the probe (431) pierces into the electrode terminal (21) of the cell (20).

6. The battery pack according to claim 1, **characterized in that** a recess is provided on a lower surface of the upper cover (30) in a direction away from the cell (20), and an exhaust channel (32) is formed between the recess and a top of the cell (20), the exhaust channel (32) at least covers a part above an explosion-proof valve of some of the cells (20).

7. The battery pack according to claim 6, **characterized in that** a cooling channel (31) is provided inside the upper cover (30), and the cooling channel (31) at least partially passes through a part above the conductive sheet (41) and/or the electrode terminal (21) and/or the exhaust channel (32), a liquid inlet and a liquid outlet of the cooling channel (31) are both located on an upper surface of the upper cover (30).

8. The battery pack according to claim 7, **characterized in that** a fragile portion is provided between the exhaust channel (32) and the cooling channel (31), the fragile portion is located above the explosion-proof valve of the cell (20), and the fragile portion is configured to be broken when being impacted as the explosion-proof valve of the cell (20) is exploded, so that the cooling channel (31) communicates with the exhaust channel (32).

9. The battery pack according to claim 1, **characterized in that** at least one of the upper cover (30) and the tray (10) is provided with a pre-positioning device, and the pre-positioning device is configured to keep the upper cover (30) at a specified position relative to the tray (10).

10. The battery pack according to claim 2, **characterized in that** a buffer pad made of an elastic heat-conducting material is provided between the lower surface of the upper cover (30) and the cell (20), and a buffer medium made of the elastic heat-conducting material is provided between a bottom surface of the cell (20) and the tray (10).
